# EUROPEAN PATENT APPLICATION

(11) **EP 2 037 651 A1**
(43) Date of publication of application: **18.03.2009**
(21) Application number: 07116277.0
(22) Date of filing: 12.09.2007
(51) Int. Cl.: H04L 29/06

(54) **Method and system for accessing devices in a secure manner**

(71) Applicant: ABB Technology AG, 8050 Zurich (CH)
(72) Inventor: Hohlbaum, Frank, 79713 Bad Säckingen (DE); Brändle, Markus, 5443 Niederrohrdorf (CH)
(74) Representative: ABB Patent Attorneys

(57) **Abstract**

The present invention is concerned with a secure and trustable way of accessing devices in an embedded device environment with no network connectivity to any outside service. This type of access to access-critical embedded devices by a user or service technician is controlled by way of a mobile memory or access-ticket storage means, i.e. a physical token such as a smartcard or USB stick with appropriate memory for storing user credentials or user identification means such as a password or fingerprint. The user acquires an electronic access ticket with a suitable expiration period from a centralized ticket or access authorization server before travelling to the access-critical device, or to a location communicatively connected to the latter. The access ticket contains the access rights of the user with respect to one or several access-critical devices and is likewise stored on the mobile memory means. The access rights are evaluated by the access-critical devices upon authentication of the identity of the user, based on the user credentials, by an authenticating device to which the mobile memory means is coupled.

## Description

### FIELD OF THE INVENTION

The invention relates to the field of industrial process control. It departs from a method of accessing, by a user or operator, an access-critical device of an industrial process control system as described in the preamble of claim 1.

### BACKGROUND OF THE INVENTION

Embedded devices or servers are today important elements of industrial process control systems including industrial automation, power plant control, electric/gas/water utility automation, as well as of the critical infrastructures of the corresponding computer networks (routers, managed switches, firewalls). During their operational lifetime, these embedded devices have to be accessed by human users and software processes to issue commands, obtain measurements or status information, diagnose failures, and change settings and applications. As these devices are critical for their respective system, access to them should be restricted and strictly controlled.

However, password based authentication schemes for access-critical embedded devices do not provide the necessary security and scalable manageability in a scenario that has only a small number of human users (operators, maintenance staff on client workplaces) in charge of a large number of embedded devices. The users typically belong to multiple organizations, and each user must have the ability to access a large number of embedded devices (acting as servers). The embedded servers are distributed physically and organizationally, and thus belong to different authentication domains. In fact, in the typical embedded environment today each embedded device is its own authentication domain with its own user base, because of a historical need for each device to be able to operate in full independence of other hosts and outside communication links to maximize resiliency and dependability of the system controlled by this embedded device. Such an embedded device scenario contrasts with a purely commercial scenario where many clients have access to a limited number of servers.

In the embedded device scenario above, conventional password-based access control and authentication directly on the embedded device suffers from several major weaknesses: Access is in practice not revocable, because it is based on knowledge, and reconfiguring all affected servers would be impracticable. Also, storage limitations on the devices typically limit the number of user accounts and thus require group credentials, which prevent individual accountability. If users use the same password for multiple devices then the compromise of a single device leads to a compromise of the whole system.

In order to avoid these drawbacks, the access rights of individual clients are maintained in a central Authentication and Authorization (AA) control server under control of the access granting organization. This allows a quick roll-out of changes to access rights, and role based access control may be used for scalable client rights assignment. The patent application WO 03/107133 discloses a particular authentication protocol to be used in cases where a Secure Remote Management Appliance (SRMA), contrary to the user or remote administrator, does not have a connection to a centralized Access Control Server (ACS). Upon the user attempting to connect to the SRMA, the SRMA issues a challenge in the form of a random number Ns. The ACS then prepares a message to be sent to the SRMA via the user, the message including authorization information for the user re the SRMA. This information is encrypted using a public key of the SRMA in order to protect confidentiality, and a hash of the information along with the original challenge Ns is encrypted with a private key of the ACS in order to proof integrity of the information. If necessary, a public key of the SRMA (pubs) is provided to the user by the ACS in order for the user to authenticate the SRMA.

However, main functionality and local emergency device access must not depend on the availability of a central server or communication infrastructure, i.e. the access control scheme should support embedded servers that are isolated and only accessible via front panel or direct console port access. The article by M. Naedele entitled "An Access Control Protocol for Embedded Device", 4th International IEEE Conf. on Industrial Informatics (INDIN 2006), Singapore, August 2006) mentions a combination of a centralized user management with off-line device access, in which a service technician acquires a capability with a suitable expiration period from the access authorization server before travelling to the embedded server location. The capability comprises the access rights which it authorizes and thus can be evaluated offline by the target server.

### DESCRIPTION OF THE INVENTION

It is therefore an objective of the invention to indicate a secure and trustable way of accessing devices in an embedded device environment with no network connectivity to any outside service. This objective is achieved by a method and system of accessing an access-critical device according to the claims 1 and 6. Further preferred embodiments are evident from the dependent patent claims.

According to the invention, access to access-critical embedded devices by a user or service technician is controlled by way of a mobile memory or access-ticket storage means, i.e. a physical token such as a smartcard or USB stick with appropriate memory for storing user credentials or user identification means such as a password or fingerprint. The user acquires an electronic access ticket or capability file with a suitable expiration period from a centralized ticket or access authorization server before travelling to the access-critical device, or to a location communicatively connected to the latter. The access ticket contains the access rights of the user with respect to one or several access-critical devices and is likewise stored on the mobile memory means. The access rights are evaluated by the access-critical devices upon authentication of the identity of the user, based on the user credentials, by an authenticating device to which the mobile memory means is coupled or engaged.

In a first preferred variant of the invention, the access ticket is encrypted by means of a private key of the ticket server and decrypted by the authenticating device in order to establish the authenticity of the access rights, i.e. to verify that the user himself has not tampered with the access rights.

In a second preferred variant of the invention, the authenticating device is either identical to the access-critical device, or is a dedicated ticket distributor that transmits the individual access rights to a number of connected access-critical devices, thus providing a simple authentication process for accessing multiple devices. The ticket distributor may itself be an embedded device, e.g. as part of the Operator Workstation of a Substation Automation system.

Advantageous embodiments of the invention are directed to the case necessitating the physical presence of the user at the devices for maintenance actions, as well as to the user accessing the access-critical device via a Human-Machine-Interface (HMI) of an HMI device, e.g. the Operator Workstation of a Substation Automation system, being communicatively connected to the access-critical devices. In the latter case, the HMI device is potentially identical to the authenticating device and preferably adapted for secure communication sessions with the access-critical devices.

In a further preferred variant of the invention, appropriate severely restricted access rights, e.g. for shutdown, are stored onsite for emergency situations and can be invoked by any user.

The inventive method or access protocol is most beneficially applied to the case of substation automation where the embedded devices for protection and control of the substation primary equipment, also termed Intelligent Electronic Devices, are generally located in a single control room. A user or operator initially authenticated at the ticket distributor may then serially move to and access several embedded devices in the control room without having to re-authenticate at each device. In addition, user authentication for the purpose of IED access may be combined with a physical access control to the control room.

The method according to the invention retains many features of the *remote* offline protocol mentioned in the paper above, where there is a permanent communication connection between the user and the access-critical device (but not between the latter and the AA server). In particular, as there can be no revocation scheme, appropriate expiration periods are used, ranging from minutes to days depending on the time required for the actual physical displacement of the user as well as the time allocated to the execution of the planned maintenance task. Other valid advantages of a centralized user management scheme are simplicity (creation and deletion of user accounts at the AA server), access rights based on user and current task, and absence of accounts or any kind of secret stored on access-critical devices.

### BRIEF DESCRIPTION OF THE DRAWINGS

The subject matter of the invention will be explained in more detail in the following text with reference to preferred exemplary embodiments which are illustrated in the attached drawings, in which:
Fig.1 shows a system for accessing an access-critical device, and
Fig.2 depicts a substation automation system with an authenticating device.

### DETAILED DESCRIPTION OF PREFERRED EMBODIMENTS

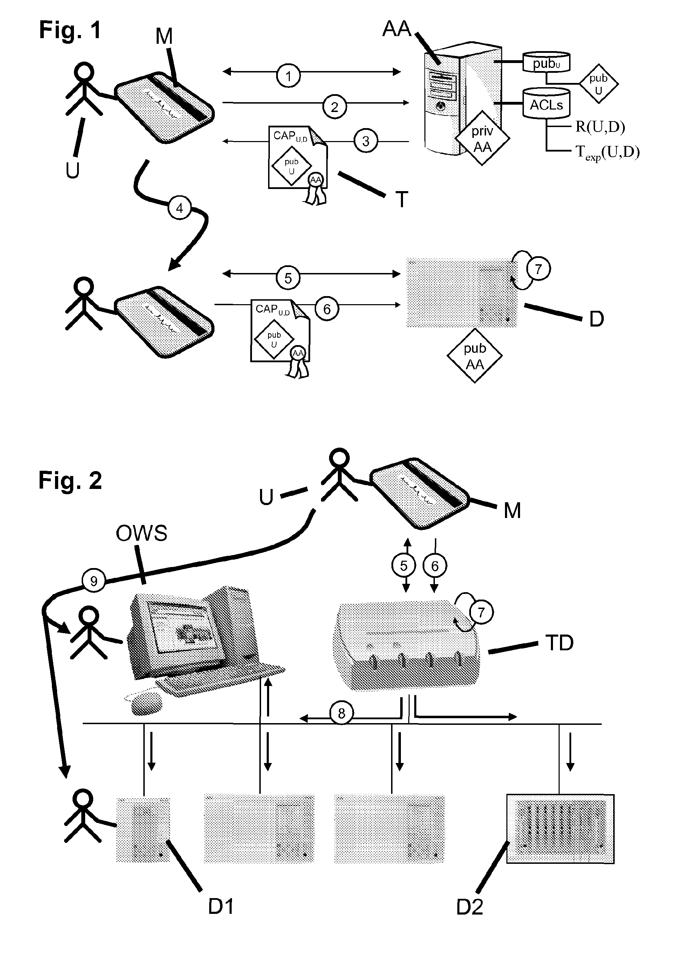

Fig.1 schematically shows a system for accessing an access-critical device or embedded server D by a user or client U, comprising an authentication and authorization, or short, Access Authority AA server. Despite only one embedded server and one client being shown, the inventive system may comprise several embedded servers and several clients as well as more then one access authority sever.

The access authority AA holds information needed to make access control decisions:
- A matrix R(U, D) of access rights for all users U on all devices D. The specific rights R(U, D) in the matrix may be generic (read/write/update/delete) or application/server specific. They only need to be interpretable by the device D and may be device specific.
- A rule set Tₑₓₚ(U, D) determining the expiration time of access rights granted to a user U for access to a deice D. The actual expiration time may depend on U, D, the requested access rights, and contextual information like the intended method of accessing the device server (online, or offline via direct physical/ console access).

The access authority server AA likewise stores a public key pub_{U} for all registered users U, forming a key pair together with a private key priv_{U} that is secret and only known to that user U. This is a manageable task, because the access authority server AA is the only central location where these keys, of limited number, need to be registered.

The access authority server AA further has its own key pair pub_{AA} and priv_{AA} of which priv_{AA} is secret and only known to the access authority server AA while pub_{AA} again is a public key which is not secret. In particular, the embedded devices D hold the public key pub_{AA} of the access authority server AA. Being a public key, pub_{AA} is not secret and is the same key for all devices, so it can be efficiently pre-installed on all embedded devices.

In the following, individual steps 1-7 of the proposed authentication and access control protocol will be explained, wherein the order of the steps may be at least partly rearranged without jeopardizing the proper working of the protocol.

Step 1: User U authenticates to access authority server AA by means of the user credentials stored on the mobile memory or ticket storage means M, i.e. by means of a password, personal identification code (PIN) or fingerprint stored on a computer readable memory device such as a smartcard or USB stick. Alternatively, if the user is communicating with the AA over a communication network, it is assumed that there is a mechanism in place that allows the user U to authenticate to the access authority server AA and communicate with the access authority server AA in a sufficiently secure way.

Step 2: User U requests from the access authority server AA a ticket, i.e. an electronic representation of access rights to the target device D.

Step 3: The access authority server AA checks, based on the information stored in its databases, whether and to what extent under the given circumstances, such as the requested rights and the intended access method (online, offline), access to the target device D can be granted to user U. The access authority server AA issues then an appropriate access ticket which is stored on the mobile memory means M of the user U. This ticket may indicate e.g. "User U1 for 1 day upload all DR files from plant automation devices of sector B", or "User U2 for 1 week change all protection parameters in device D1 and D3 of substation Gotham City 1".

The access authority server AA may enclose the public key pub_{U} or another unique identifier of the user within the issued ticket. The ticket or its hash is then signed with the private key of the access authority server AA. This way the embedded device D can also verify that the ticket has actually been issued to the specific user U.

Step 4: The User U physically moves his mobile memory means M to device D, and connects to the latter via direct console or front panel access (USB or Ethernet interface/port).

Step 5: As in step 1, user U authenticates, by means of the user credentials stored on the mobile memory means M, to the access-critical device D acting as authorizing device. To that end, the user U enters a password or personal identification code (PIN) via a keyboard or touches a fingerprint-scanner of the device D. The access-critical device D then compares this Human-Machine-Interface (HMI) input with the corresponding user credentials stored on the mobile memory means M.

Step 6: User U presents the access ticket received from the access authority server AA to target device D.

Step 7: The device D verifies the access ticket by checking the signature of the access authority server AA on the ticket using the public key pub_{AA} of the access authority server AA, whether the ticket has actually been issued to U and is indeed addressed to D, and whether the ticket has not yet expired.

In Fig.2, a number of Intelligent Electronic Devices (IEDs) D1, D2, D3 of a substation automation system are depicted, interconnected by a station bus operating according to IEC 61850. A dedicated ticket distributor TD acts as authorizing device, to which the user U connects his mobile memory means and authenticates as in step 5 above. The User then presents the access ticket, or a plurality of access tickets, to the authorizing device, which proceeds to a verification of the latter analogous to step 7 above. The additional steps of initiating a data exchange session between the user U and the target device D1 are:
Step 8: The access tickets are distributed to the respective target devices over the station bus.
Step 9: The user moves further to the IED D1 of his choice, and uses the local HMI of D1 without having to locally authenticate. Alternatively, the user turns to an Operator Workstation OWS of the substation automation system, and via its HMI opens a communication session with the device D1. Obviously, the HMI of the OWS can be used as the HMI of the TD during the previous authentication steps. If the station bus is not considered secure enough, the communication between the user U or Operator Workstation OWS and the device can be encrypted upon forwarding the user's public key pub_{U} to the device D.

## Claims

1. Method of accessing, by a user (U), an access-critical device (D) of an industrial control system, comprising
- issuing, by a ticket server (AA), an access ticket (T) with the users access rights to the access-critical device (D), and
- granting, by the access-critical device (D), the user (U) access to the access-critical device (D) according to the access rights,
**characterized in that** the method comprises
- storing the access ticket (T) together with some user credentials on a mobile memory means (M) of the user (U),
- physically moving and coupling the mobile memory means (M) to an authenticating device (D, TD), and
- authenticating the user (U) by the authenticating device (D, TD), based on the user credentials stored on the connected mobile memory means (M), and transmitting the access rights from the mobile memory means (M) to the access-critical device (D).

2. The method according to claim 1, **characterized in that** it comprises
- signing the access ticket (T) by the ticket server (AA), and authenticating the access ticket (T) by the authenticating device (D, TD).

3. The method according to claim 1, **characterized in that** it comprises
- authenticating the user (U) by the authenticating device (TD) and distributing access rights to a plurality of access-critical devices (D1, D2) connected to the authenticating device (TD).

4. The method according to claim 3, **characterized in that** it comprises
- accessing, by the user (U), the access-critical devices (D1, D2) via the authenticating device (TD), and
- encrypting the communication between the authenticating device (TD) and the access critical devices (D1, D2).

5. The method according to claim 1, **characterized in that** it comprises
- storing, on the access-critical device (D), restricted access rights for emergency.

6. Industrial control system with a number of access-critical devices (D) for controlling an industrial process, the access-critical devices (D) granting access to a user (U) according to centrally managed access rights of the user (U), the system comprising
- a ticket server (AA) for issuing an access ticket (T) with the user's (U) access rights to the access-critical device (D),
- mobile memory means (M) for storing the access ticket (T) together with some user credentials, and
- an authenticating device (D, TD) to which the mobile memory means is moved and coupled, for authenticating the user (U) based on the user credentials stored on the connected mobile memory means (M), and for transmitting the access rights to the access-critical device (D).

7. The system according to claim 6, **characterized in that** the authenticating device is the access-critical device (D), or **in that** the authenticating device is a ticket distributor (TD) distributing access rights to a plurality of access-critical devices (D1, D2) connected to the authenticating device.

8. The system according to claim 6 or 7, **characterized in that** it is a substation automation system, and **in that** the authenticating device is an Operator Workstation (OWS) of the substation.

9. The system according to claim 8, **characterized in that** the user (U) accesses to the access-critical devices (D1, D2) via the OWS and a secure station bus.
